# EUROPEAN PATENT SPECIFICATION

(11) **EP 0 505 664 B1**
(45) Date of publication and mention of the grant of the patent: **12.07.1995**
(21) Application number: 91830148.2
(22) Date of filing: 16.04.1991
(51) Int. Cl.: C09D 5/29, C09D 7/14

(54) **Method for the preparation of a small particle dispersion coating composition and coating composition obtained with such method**
Verfahren zur Herstellung einer feinteiligen Dispersionsbeschichtungszusammensetzung und so erhaltene Beschichtungszusammensetzung
Procédé de préparation d'une dispersion en fines particules pour composition de revêtement et composition de revêtement ainsi obtenue

(30) Priority: 11.03.1991 IT TO910168
(43) Date of publication of application: 30.09.1992
(73) Proprietor: C.A.N.D.I.S.S. CHIMICA APPLICATA NORD ITALIA DI GILLI ALBERTO, I-10020 Andezeno (Torino) (IT)
(72) Inventor: Gilli, Alberto, I-10025 Andezeno (Torino) (IT)
(74) Representative: Rambelli, Paolo

(56) References cited:
- EP-A- 0 424 594
- US-A- 3 458 328

## Description

The present invention relates to a method of producing a paint of the type with dispersed particles.

In particular, the present invention relates to a method of producing water-based, so-called multi-coloured paints which can be applied by spraying. These products are normally produced without the use of organic solvents and are constituted by a collection of monochromatic globules of one or more colours dispersed in an aqueous solution containing an agent for enabling the product to form a film after application. The elimination of the solvent phase from the system has caused problems of poor resistance to washing after application and poor colour-stability since, if the mass of globules which constitute the decoration is stirred to make the product homogeneous before spraying, the globules release a certain amount of colour.

The object of the present invention is to provide a method and a paint which can overcome the aforesaid problems and achieve exactly the same resistance to washing and colour-stability as can be achieved by the solvent phase/aqueous phase multicoloured systems which have now been abandoned for ecological reasons but which are still considered by all the experts in the art to be the best from the point of view of resistance to washing and colour-stability.

This object is achieved by virtue of the fact that the method includes the steps listed in the enclosed claim 1.

The aqueous film-forming mixture is preferably based on an emulsion of acrylic esters and a pure acrylic emulsion and the precipitating agent is selected from the group consisting of prismatic sodium tetraborate decahydrate, boracite, magnesium borate with magnesium chloride, aluminium sulphate, polyvinylpyrrolidonevinyl acetate copolymer and mixtures thereof.

The plasticiser is preferably dioctyl maleate or dibutyl phthalate.

Naturally, the method of the present invention can be used with globules 100% of which are of a single colour, or with mixtures of monochromatic globules of two or more different colours in proportions which may vary widely.

The very good washability and colour-stability are achieved at the formulative level by the use of colloid particles, for example, a mixture of D-galactose and D-mannose (commonly known as galactomannan) some polysaccharides or some guar gums, or certain zinc-complex resins which can be dispersed in water and form colloidal dispersions which can be thickened by 28 % ammonia. These colloids are dissolved in an aqueous phase including thickeners, dyed with pigments, and precipitated by an agent adapted to recoagulate the colloids which thus become insoluble in the aqueous phase. The mixture thus produced must then be stabilised and added to a vehicle which enables it subsequently to be sprayed onto a substrate and to form a film thereon.

The first step of the method is the dispersion and dissolving of the colloid, the subsequent addition of additives, and the dying of the solution produced. A medium-speed disperser is used and the colloid is dispersed in water until it is completely dissolved. The colloid used is preferably a galactomannan, but other colloids such as, for example, polysaccharides, some guar gums, or zinc-complex resins which can be dispersed in water and form colloidal dispersions which can be thickened by 28 % ammonia may also be used singly or mixed together.

A mixture of N-O formals and N-S heterocycles is then added as an antibacterial agent, as well as a phosphate-based dispersant such as sodium hexametaphosphate, sodium tripolyphosphate or the like, an antifoaming agent based on mineral oil and metallic soaps and, in order to opacify the product and give it the correct body, an opacifier/thickener powder, for example, a very fine aluminium silicate, is then added, again with stirring, and stirring is continued at a high speed for five minutes.

An emulsion of a film-generating resin, for example, a polyacetovinyl emulsion with a 50% solids content, is then added to reduce the flexibility of the globules to be formed and to ensure better colour retention. Finally, a pigment of the desired colour is added to the intermediate product in the form of an aqueous paste.

This first step can obviously be repeated if a paint product having monochromatic globules of various colours is required.

After the coloured colloid has been dispersed and dissolved, the colloid solution is precipitated. For this purpose, a solution of a precipitating agent in water is prepared; the precipitating agent may be constituted by one salt or a mixture of various salts. The preferred salts are prismatic sodium tetraborate decahydrate, boracites such as Kernite, magnesium borate with magnesium chloride, aluminium sulphate, or even polyvinylpyrrolidone-vinyl acetate copolymers. A so-called rheological agent (for example a clay based on aluminium oxide and silicon dioxide) is then added to the solution which is made alkaline with sodium hydroxide. The solution of the precipitating agent is mixed with the first intermediate product, preferably in a ratio of 20 parts by weight of the precipitating agent to 80 parts of the coloured intermediate product with continuous stirring. The dimensions of the coloured globules can be varied according to the stirring speed at this stage. Moreover, with a given stirring speed, an increase in the proportion of the solution of the precipitating agent in the intermediate product produces larger globules.

The precipitation of the colloid solution is followed by the thickening and stabilising of the coloured globules. This step is necessary to facilitate subsequent spray-application. 10 parts by weight of an aqueous solution including a mineral-oil-based antifoaming agent, a first thickener powder of the attapulgite type and a second thickener, for example, a polyacrylic high polymer containing amide groups are then added to 90 parts by weight of the product obtained after precipitation and stirred gently (the two thickeners are suitable for giving the product the required rheological characteristics). In order to improve the stability of the globules, a wetting agent such as an alkylammonium salt of an anionic/non-ionic polyfunctional polymer and a plasticiser such as dioctyl maleate or dibutyl phthalate are added with the antifoaming agents and thickeners. Before it is added to the intermediate coloured product, this aqueous solution is stirred for about 20 minutes. The product obtained by the mixing of this aqueous solution with the precipitated colloidal solution is allowed to rest for about 18-24 hours before being processed further to enable it to be cured fully and the reactions between its various components to be completed.

The last step of the method is the addition to the coloured product of the so-called film-forming phase, that is, the phase which constitutes a vehicle for the decorative part represented by the mixture of stabilised and cured coloured globules during the spraying stage and, once it has reached the substrate to be covered, causes it to be fixed thereto in an optimal manner.

The film-forming part or vehicle is composed of a mixture of water which is heated to 45°C, stabilised with carboxy-vinyl polymer, cooled and neutralised with 28% ammonia and to which a conventional antifoaming agent and an antibacterial agent whose active constitutent is represented by 1-(3-chloroallyl)-3,5,7-triazo-1-azonium-adamantane chloride are added. This aqueous phase is then mixed with an emulsion with a 40% solid content of acrylic esters in water blended in a proportion of from 90% to 65% with a pure acrylic emulsion, which is used partly to plasticise the former; this combination of resins has the advantage that it is constituted by very fine particles, but good results can also be achieved with the use of other emulsions. The aqueous mixture constituting the film-forming vehicle is inserted in a pressurised container containing the intermediate coloured product under a pressure of 2 bars. The latter mixture and the film-forming vehicle are stirred slowly for about 20 minutes. The ratio by weight between the film-forming vehicle and the coloured product may vary between 15/85 and 40/60 according to the final characteristics to be achieved (the kind of pattern desired) and the required viscosity and density of the decorative pattern. In order to complete the processing of the paint, the mixture is stirred slowly under a vacuum of 0.6 bars; at this stage the product is homogenised and de-aerated and the coloured globules are permeated by the film-forming vehicle to yield the final product which, after stirring for about 30 minutes under vacuum can be packaged and stored. The paint is ready for spraying from a drum pressurised to 2-2.5 bars by a gun which may equally well be of the internal air-mixing type or of the pressure-drop type with a 2.5 or 3 mm nozzle.

Two examples of wholly water-based multicoloured products formulated according to the invention are given below.

### Example 1

The preparation of coloured globules (in 2 different colours) after the dissolving of a colloid and its subsequent precipitation by a suitable precipitating agent, with the addition of a stabilising and thickening solution.

### Blue solution A

| | |
|---|---|
| Galactomannan | 1.200 |
| Antimould agent (mixture of N-O formals and N-S heterocycles) | 0.030 |
| Dispersant (10% sodium hexametaphosphate solution in water) | 15 |
| Antifoaming agent | 0.500 |
| Polyacetovinyl resin | 12.350 |
| Aluminium silicate | 9.200 |
| Phthalocyanine blue paste | 1.500 |
| Water to make up to | 100 |

### Green solution A

| | |
|---|---|
| Galactomannan | 1.200 |
| Antimould agent (mixture of N-O formals and N-S heterocycles) | 0.030 |
| Dispersant (10% sodium hexametaphosphate solution in water) | 15 |
| Antifoaming agent | 0.500 |
| Polyacetovinyl resin | 12.350 |
| Aluminium silicate | 9.200 |
| Phthalocyanine green paste | 1.500 |
| Water to make up to | 100 |

### Solution B

| | |
|---|---|
| Bentonite thickener | 10 |
| Prismatic sodium borate decahydrate | 1.500 |
| Sodium hydroxide (20% in water) | 2 |
| Water to make up to | 100 |

The percentage of bentonite may be varied in order to make the solution B more or less viscous. 20 parts of Solution B are mixed with 80 parts of blue solution A with stirring. Different percentages may also be used taking account of the fact that, for a given dispersion speed, the greater the percentage of solution B the larger will be the dimensions of the globules.

The same applies to the green solution A.

Globules of 2 different colours are thus precipitated and set and are then mixed in the desired proportions.

The mixture thus obtained is called mixture C.

### Solution D

| | |
|---|---|
| Thickener (aluminium and magnesium silicate) | 20 |
| Antifoaming agent | 0.100 |
| Thickener (polyacrylic high polymer salt containing amide groups) | 5.600 |
| Wetting agent | 0.800 |
| Dioctyl maleate | 0.700 |
| Hexylene glycol | 2.900 |
| Propylene glycol | 1 |
| 28 % ammonium hydroxide | 0.550 |
| Water to make up to | 100 |

10 parts of solution D are added to 90 parts of solution C to form a mixture E.

### Preparation of the film-forming vehicle and completion of the product

| | |
|---|---|
| Carboxyvinyl polymer | 0.700 |
| Ammonium hydroxide | 1.100 |
| Antifoaming agent | 0.300 |
| Antibacterial agent (act.const. 1-(3-chloroallyl)-3,5,7-triazo-1-azoniumadamantane chloride) | 0.500 |
| Emulsion of acrylic esters (40%) | 36÷26 |
| Acrylic emulsion (50%) | 4÷14 |
| Water to make up to | 100 |

The film-forming vehicle is introduced into the mixture E under pressure in proportions which may vary between 15 parts-85 parts and 40 parts-60 parts. After the process has been completed by slow stirring under vacuum, this product can be applied by spraying and, once it has suitably dried and set on the substrate, shows the improved characteristics mentioned in the description.

### Example II

The preparation of coloured globules (of 2 different colours) and the subsequent precipitation of a colloid by a suitable precipitating agent, with the addition of a stabilising and thickening solution.

### Yellow solution A

| | |
|---|---|
| A mixture of D-galactose and D-mannose | 1.500 |
| Antimould agent (an amino derivative of propanol) | 0.300 |
| Dispersant (sodium tripolyphosphate) | 1.300 |
| Antifoaming agent | 0.400 |
| Terpolymer resin (ethylene, vinyl acetate, vinyl chloride) | 10 |
| Precipitated calcium carbonate | 8 |
| Azoic yellow pigment paste | 1 |
| Water to make up to | 100 |

### Red solution A

| | |
|---|---|
| A mixture of D-galactose and D-mannose | 1.500 |
| Antimould agent (an amino derivative of propanol) | 0.300 |
| Dispersant (sodium tripolyphosphate) | 1.300 |
| Antifoaming agent | 0.400 |
| Terpolymer resin (ethylene, vinyl acetate, vinyl chloride) | 10 |
| Precipitated calcium carbonate | 8 |
| Azoic red pigment paste | 1 |
| Water to make up to | 100 |

### Solution B

| | |
|---|---|
| Thickener (a mixture of montmorillonite and aluminium silicate) | 9.5 |
| Kernite | 1.800 |
| Sodium hydroxide (25% in water) | 2 |
| Water to make up to | 100 |

15 parts of solution B are mixed by mechanical stirring with 85 parts of yellow solution A. The same operation is repeated with red solution A.

The mixture produced is called mixture C.

### Solution D

| | |
|---|---|
| Antifoaming agent | 0.150 |
| Thickener (Bentonite) | 9 |
| Thickener (2% solution of sodium carboxymethyl cellulose) | 5 |
| Wetting agent | 0.700 |
| Dibutylphthalate | 0.500 |
| Hexylene glycol | 2.500 |
| Monoethylene glycol | 1 |
| 28 % ammonium hydroxide | 0.600 |
| Water to make up to | 100 |

8 parts of solution D are added to 92 parts of solution C to produce a mixture E.

### Preparation of the film-forming vehicle

| | |
|---|---|
| A dispersion of a soluble alkali acrylic copolymer | 8 |
| 28% ammonium hydroxide | 1.400 |
| Antifoaming agent | 0.200 |
| Antibacterial agent (an amino derivative of propanol) | 0.300 |
| Emulsion of acrylic esters (40%) | 30 |
| Acrylic emulsion (50%) | 10 |
| Water to make up to | 100 |

In this example the film-forming vehicle is also introduced into the mixture E under pressure in proportions which may vary between 15 parts-85 parts and 40 parts-60 parts. As in the first example, the processing must be completed by slow stirring under vacuum, after which the product can be applied by spraying and, after complete drying and setting, shows very good characteristics of washability and uniformity of the decoration.

Naturally, it is intended that, the principle of the invention remaining the same, the forms of embodiment of the method may vary widely with respect to those described, without thereby departing from the scope of the present invention.

## Claims (Claims for the following Contracting State(s): AT, BE, CH, DE, DK, FR, GB, GR, IT, LI, LU, NL, SE)

1. A method of producing a paint of the type with dispersed particles, characterised in that it comprises the following steps:
- dispersing a colloid in water until it has dissolved completely, said colloid being selected from the group consisting of D-galactose, D-mannose, polysaccharides, guar gums zinc-complex resins which can be dispersed in water and mixtures thereof,
- adding to the solution, with stirring, a phosphate-based disperser, an opacifier/thickener powder, an emulsion of a film-forming resin and a coloured pigment in an aqueous paste,
- adding to the first intermediate product a first solution based on a precipitating agent in water to precipitate the colloid solution, said precipitating agent being selected from the group consisting of prismatic sodium tetraborate hydrate, boracite, magnesium borate with magnesium chloride, aluminium sulphate, polyvinylpyrrolidone-vinyl acetate copolymer and mixtures thereof, and the ratio by weight between the first solution and the first intermediate product being between 0.1 and 0.3,
- adding to the second intermediate product a second solution based on a thickener powder and a plasticiser to stabilize the coloured particles, the ratio by weight between the second solution and the second intermediate product being between 0.05 and 0.2,
- leaving the third intermediate product to cure for a period long enough to ensure that the reactions between its various components are complete, and
- adding an aqueous film-forming mixture to the third intermediate product, the ratio by weight between the aqueous filming mixture and the third intermediate product being between 0.15 and 0.7.

2. A method according to Claim 1, characterised in that the aqueous film-forming mixture comprises an emulsion of acrylic esters and a pure acrylic emulsion.

3. A method according to any one of the preceding claims, characterised in that the plasticiser is dioctyl maleate, butyl phthalate, or a mixture thereof.

4. A method according to any one of the preceding claims, characterised in that the aqueous film-forming mixture is added to and mixed with the third intermediate product in a pressurised container and in that the finished product is stirred under vacuum for a period long enough for it to be homogenised and de-aerated.

5. A paint of the type with dispersed particles obtainable by a method according to any one of the preceding claims.

## Claims (Claims for the following Contracting State(s): ES)

1. A method of producing a paint of the type with dispersed particles, characterised in that it comprises the following steps:
- dispersing a colloid in water until it has dissolved completely, said colloid being selected from the group consisting of D-galactose, D-mannose, polysaccharides, guar gums zinc-complex resins which can be dispersed in water and mixtures thereof,
- adding to the solution, with stirring, a phosphate-based disperser, an opacifier/thickener powder, an emulsion of a film-forming resin and a coloured pigment in an aqueous paste,
- adding to the first intermediate product a first solution based on a precipitating agent in water to precipitate the colloid solution, said precipitating agent being selected from the group consisting of prismatic sodium tetraborate hydrate, boracite, magnesium borate with magnesium chloride, aluminium sulphate, polyvinylpyrrolidone-vinyl acetate copolymer and mixtures thereof, and the ratio by weight between the first solution and the first intermediate product being between 0.1 and 0.3,
- adding to the second intermediate product a second solution based on a thickener powder and a plasticiser to stabilize the coloured particles, the ratio by weight between the second solution and the second intermediate product being between 0.05 and 0.2,
- leaving the third intermediate product to cure for a period long enough to ensure that the reactions between its various components are complete, and
- adding an aqueous film-forming mixture to the third intermediate product, the ratio by weight between the aqueous filming mixture and the third intermediate product being between 0.15 and 0.7.

2. A method according to Claim 1, characterised in that the aqueous film-forming mixture comprises an emulsion of acrylic esters and a pure acrylic emulsion.

3. A method according to any one of the preceding claims, characterised in that the plasticiser is dioctyl maleate, butyl phthalate, or a mixture thereof.

4. A method according to any one of the preceding claims, characterised in that the aqueous film-forming mixture is added to and mixed with the third intermediate product in a pressurised container and in that the finished product is stirred under vacuum for a period long enough for it to be homogenised and de-aerated.

## Patentansprüche (Patentansprüche für folgende(n) Vertragsstaat(en): AT, BE, CH, DE, DK, FR, GB, GR, IT, LI, LU, NL, SE)

1. Verfahren zur Herstellung einer Farbe vom Dispersionsteilchen-Typ, dadurch gekennzeichnet, daß es die folgenden Stufen umfaßt:
- Dispergieren eines Kolloids in Wasser bis es vollständig gelöst ist, wobei das Kolloid aus der Gruppe, bestehend aus D-Galaktose, D-Mannose, Polysaccariden, Guarmehl-Zinkkomplexharzen, die in Wasser dispergiert werden können, und Gemischen davon, ausgewählt wird,
- unter Rühren Zugabe eines auf Phosphat basierenden Dispergators, eines Trübungsmittels/Eindickpulvers, einer Emulsion eines film-bildenden Harzes und eines farbigen Pigments in einer wäßrigen Paste zur Lösung,
- Zugabe zum ersten Zwischenprodukt einer ersten Lösung, basierend auf einem Präzipitationsmittel in Wasser, um die Kolloid-Lösung zu präzipitieren, wobei das Präzipitationsmittel aus der Gruppe, bestehend aus prismatischem Natriumtetraborat-Hydrat, Borazit, Magnesiumborat mit Magnesiumchlorid, Aluminiumsulfat, Polyvinylpyrrolidon-Vinylacetat-Copolymer und Gemischen davon, ausgewählt wird, wobei das Gewichtsverhältnis zwischen der ersten Lösung und dem ersten Zwischenprodukt zwischen 0,1 und 0,3 liegt,
- Zugabe zum zweiten Zwischenprodukt einer zweiten Lösung, basierend auf einem Eindickpulver und einem Weichmacher, um die farbigen Teilchen zu stabilisieren, wobei das Gewichtsverhältnis zwischen der zweiten Lösung und dem zweiten Zwischenprodukt zwischen 0,05 und 0,2 liegt,
- Ruhenlassen des dritten Zwischenprodukts derart, daß es einen Zeitraum gehärtet wird, der lang genug ist, daß die Reaktion zwischen seinen verschiedenen Bestandteilen vollständig ist, und
- Zugabe eines wäßrigen film-bildenden Gemisches zum dritten Zwischenprodukt, wobei das Gewichtsverhältnis zwischen dem wäßrigen film-bildenden Gemisch und dem dritten Zwischenprodukt zwischen 0,15 und 0,7 liegt.

2. Verfahren nach Anspruch 1, dadurch gekennzeichnet, daß das wäßrige film-bildende Gemisch eine Emulsion eines Acrylesters und eine reine Acryl-Emulsion umfaßt.

3. Verfahren nach einem der vorstehenden Ansprüche, dadurch gekennzeichnet, daS der Weichmacher Dioctylmaleat, Butylphthalat oder ein Gemisch davon ist.

4. Verfahren nach einem der vorstehenden Ansprüche, dadurch gekennzeichnet, daß das wäßrige film-bildende Gemisch zum dritten Zwischenprodukt in einem Druckbehälter gegeben wird und darin damit gemischt wird und das das fertige Produkt unter Vakuum über einen Zeitraum gerührt wird, der lang genug dafür ist, es zu homogenisieren und zu entlüften.

5. Farbe vom Dispersionsteilchen-Typ, welche durch ein Verfahren nach einem der vorstehenden Ansprüche erhältlich ist.

## Patentansprüche (Patentansprüche für folgende(n) Vertragsstaat(en): ES)

1. Verfahren zur Herstellung einer Farbe vom Dispersionsteilchen-Typ, dadurch gekennzeichnet, daß es die folgenden Stufen umfaßt:
- Dispergieren eines Kolloids in Wasser bis es vollständig gelöst ist, wobei das Kolloid aus der Gruppe, bestehend aus D-Galaktose, D-Mannose, Polysaccariden, Guarmehl-Zinkkomplexharzen, die in Wasser dispergiert werden können, und Gemischen davon, ausgewählt wird,
- unter Rühren Zugabe eines auf Phosphat basierenden Dispergators, eines Trübungsmittels/Eindickpulvers, einer Emulsion eines film-bildenden Harzes und eines farbigen Pigments in einer wäßrigen Paste zur Lösung,
- Zugabe zum ersten Zwischenprodukt einer ersten Lösung, basierend auf einem Präzipitationsmittel in Wasser, um die Kolloid-Lösung zu präzipitieren, wobei das Präzipitationsmittel aus der Gruppe, bestehend aus prismatischem Natriumtetraborat-Hydrat, Borazit, Magnesiumborat mit Magnesiumchlorid, Aluminiumsulfat, Polrvinylpyrrolidon-Vinylacetat-Copolymer und Gemischen davon, ausgewählt wird, wobei das Gewichtsverhältnis zwischen der ersten Lösung und dem ersten Zwischenprodukt zwischen 0,1 und 0,3 liegt,
- Zugabe zum zweiten Zwischenprodukt einer zweiten Lösung, basierend auf einem Eindickpulver und einem Weichmacher, um die farbigen Teilchen zu stabilisieren, wobei das Gewichtsverhältnis zwischen der zweiten Lösung und dem zweiten Zwischenprodukt zwischen 0,05 und 0,2 liegt,
- Ruhenlassen des dritten Zwischenprodukts derart, daS es einen Zeitraum gehärtet wird, der lang genug ist, daß die Reaktion zwischen seinen verschiedenen Bestandteilen vollständig ist, und
- Zugabe eines wäßrigen film-bildenden Gemisches zum dritten Zwischenprodukt, wobei das Gewichtsverhältnis zwischen dem wäßrigen film-bildenden Gemisch und dem dritten Zwischenprodukt zwischen 0,15 und 0,7 liegt.

2. Verfahren nach Anspruch 1, dadurch gekennzeichnet, daß das wäßrige film-bildende Gemisch eine Emulsion eines Acrylesters und eine reine Acryl-Emulsion umfaßt.

3. Verfahren nach einem der vorstehenden Ansprüche, dadurch gekennzeichnet, daß der Weichmacher Dioctylmaleat, Butylphthalat oder ein Gemisch davon ist.

4. Verfahren nach einem der vorstehenden Ansprüche, dadurch gekennzeichnet, daß das wäßrige film-bildende Gemisch zum dritten Zwischenprodukt in einem Druckbehälter gegeben wird und darin damit gemischt wird und daß das fertige Produkt unter Vakuum über einen Zeitraum gerührt wird, der lang genug dafür ist, es zu homogenisieren und zu entlüften.

## Revendications (Revendications pour l'(les) Etat(s) contractant(s) suivant(s): AT, BE, CH, DE, DK, FR, GB, GR, IT, LI, LU, NL, SE)

1. Procédé de production d'une peinture du type avec particules dispersées, caractérisé en ce qu'il comprend les étapes suivantes :
- dispersion d'un colloïde dans l'eau jusqu'à ce qu'il se soit dissous complètement, ledit colloïde ayant été sélectionné parmi un groupement comprenant du D-galactose, du D-mannose, des polysaccharides, des résines à base de gommes guar et de zinc qui peuvent être dispersées dans l'eau et leurs mélanges,
- addition à la solution, avec prémélange, d'un agent de dispersion à base de phosphate, d'une poudre opacifiante/épaississante, d'une émulsion d'une résine filmogène et d'une teinture colorée dans une pâte aqueuse,
- addition au premier produit intermédiaire d'une première solution basée sur un agent de précipitation dans l'eau pour précipiter la solution colloïde, ledit agent de précipitation étant sélectionné parmi un groupement consistant en un sodium prismatique d'hydrate de tétraborate, de boracite, de borate de magnésium avec chlorure de magnésium, de sulfate d'aluminium, de copolymère d'acétate polyvinylepyrrolidonevinyle et leurs mélanges, et le rapport au poids entre la première solution et le premier produit intermédiaire étant entre 0.1 et 0.3,
- addition au second produit intermédiaire d'une seconde solution basée sur une poudre épaississante et d'un plastifiant pour stabiliser les particules colorées, le rapport au poids entre la seconde solution et le second produit intermédiaire étant entre 0.05 et 0.2,
- sortie du troisième produit intermédiaire à faire reposer pendant une période assez longue pour s'assurer que les réactions entre ses composants variés sont complètes, et
- addition d'un mélange aqueux filmogène au troisième produit intermédiaire, le rapport en poids entre le mélange aqueux de formation de film et le troisième produit intermédiaire étant entre 0.15 et 0.7.

2. Procédé selon la revendication 1, caractérisé en ce que le mélange aqueux filmogène comprend une émulsion d'esters acryliques et une émulsion acrylique pure.

3. Procédé selon l'une quelconque des revendications précédentes, caractérisé en ce que le plastifiant est du maléate de dioctyle, du phtalate de butyle, ou un mélange de ceux-ci.

4. Procédé selon l'une quelconque des revendications précédentes, caractérisé en ce que le mélange aqueux filmogène est ajouté et mélangé avec le troisième produit intermédiaire dans un conteneur pressurisé et en ce que le produit fini est remué sous dépression pendant une période assez longue pour qu'il puisse être homogénéisé et désaéré.

5. Peinture du type avec des particules dispersées obtenue par le procédé selon l'une quelconque des revendications précédentes.

## Revendications (Revendications pour l'(les) Etat(s) contractant(s) suivant(s): ES)

1. Procédé de production d'une peinture du type avec particules dispersées, caractérisé en ce qu'il comprend les étapes suivantes :
- dispersion d'un colloïde dans l'eau jusqu'à ce qu'il se soit dissous complètement, ledit colloïde ayant été sélectionné parmi un groupement comprenant du D-galactose, du D-mannose, des polysaccharides, des résines à base de gommes guar et de zinc qui peuvent être dispersées dans l'eau et leurs mélanges,
- addition à la solution, avec prémélange, d'un agent de dispersion à base de phosphate, d'une poudre opacifiante/épaississante, d'une émulsion d'une résine filmogène et d'une teinture colorée dans une pâte aqueuse,
- addition au premier produit intermédiaire d'une première solution basée sur un agent de précipitation dans l'eau pour précipiter la solution colloïde, ledit agent de précipitation étant sélectionné parmi un groupement consistant en un sodium prismatique d'hydrate de tétraborate, de boracite, de borate de magnésium avec chlorure de magnésium, de sulfate d'aluminium, de copolymère d'acétate polyvinylepyrrolidonevinyle et leurs mélanges, et le rapport au poids entre la première solution et le premier produit intermédiaire étant entre 0.1 et 0.3,
- addition au second produit intermédiaire d'une seconde solution basée sur une poudre épaississante et d'un plastifiant pour stabiliser les particules colorées, le rapport au poids entre la seconde solution et le second produit intermédiaire étant entre 0.05 et 0.2,
- sortie du troisième produit intermédiaire à faire reposer pendant une période assez longue pour s'assurer que les réactions entre ses composants variés sont complètes, et
- addition d'un mélange aqueux filmogène au troisième produit intermédiaire, le rapport en poids entre le mélange aqueux de formation de film et le troisième produit intermédiaire étant entre 0.15 et 0.7.

2. Procédé selon la revendication 1, caractérisé en ce que le mélange aqueux filmogène comprend une émulsion d'esters acryliques et une émulsion acrylique pure.

3. Procédé selon l'une quelconque des revendications précédentes, caractérisé en ce que le plastifiant est du maléate de dioctyle, du phtalate de butyle, ou un mélange de ceux-ci.

4. Procédé selon l'une quelconque des revendications précédentes, caractérisé en ce que le mélange aqueux filmogène est ajouté et mélangé avec le troisième produit intermédiaire dans un conteneur pressurisé et en ce que le produit fini est remué sous dépression pendant une période assez longue pour qu'il puisse être homogénéisé et désaéré.
